(19) **Europäisches Patentamt**
**European Patent Office**
**Office européen des brevets**

(11) **EP 1 611 335 B1**

(12) **EUROPÄISCHE PATENTSCHRIFT**

(45) Veröffentlichungstag und Bekanntmachung des Hinweises auf die Patenterteilung:
**17.12.2008 Patentblatt 2008/51**

(21) Anmeldenummer: **04726140.9**

(22) Anmeldetag: **07.04.2004**

(51) Int Cl.:
**F02D 35/02** (2006.01)   **F02D 41/40** (2006.01)

(86) Internationale Anmeldenummer:
**PCT/EP2004/003723**

(87) Internationale Veröffentlichungsnummer:
**WO 2004/090312 (21.10.2004 Gazette 2004/43)**

(54) **VERFAHREN ZUM BETRIEB EINER BRENNKRAFTMASCHINE MIT SELBSTZÜNDUNG**

OPERATING METHOD FOR A SELF-IGNITION INTERNAL COMBUSTION ENGINE

PROCEDE POUR FAIRE FONCTIONNER UN MOTEUR A COMBUSTION INTERNE A ALLUMAGE AUTOMATIQUE

(84) Benannte Vertragsstaaten:
**DE FR GB IT SE**

(30) Priorität: **09.04.2003 DE 10316113**

(43) Veröffentlichungstag der Anmeldung:
**04.01.2006 Patentblatt 2006/01**

(73) Patentinhaber: **Daimler AG**
**70327 Stuttgart (DE)**

(72) Erfinder: **GÄRTNER, Uwe**
**73630 Remshalden (DE)**

(56) Entgegenhaltungen:
**EP-A- 0 859 149**      **DE-A- 3 736 430**
**DE-A- 10 008 553**   **DE-A- 10 043 383**
**DE-A- 19 606 680**   **DE-A- 19 749 817**
**DE-A- 19 849 329**

## Beschreibung

Die Erfindung betrifft ein Verfahren zum Betrieb einer Brennkraftmaschine mit Selbstzündung nach dem Oberbegriff des Anspruchs 1.

Ziel der Entwicklung von neuen Dieselbrennkraftmaschinen ist es, den Kraftstoffverbrauch zu reduzieren und Abgasemissionen, insbesondere die Stickoxid-Emissionen sowie die Rußpartikelbildung zu minimieren. Bei den modernen Brennkraftmaschinen mit Selbstzündung dient oft eine Abgasrückführung als Mittel zur Emissionssenkung, wobei eine Abgasrückführrate lastpunktabhängig eingestellt wird.

Eine weitere Senkung der Stickoxid-Emissionen kann mittels eines SCR-Katalysators erzielt werden, in dem die Zugabe bzw. die Dosierung eines Reduktionsmittels, z.B. Ammoniak, proportional zu der Stickoxidentstehung in der Brennkraftmaschine vorgenommen wird. Die erforderlichen Sicherheitseinrichtungen lassen nur begrenzte Umsätze eines solchen SCR-Katalysators zwischen 60% und 70% zu, da die Stickoxid-Rohemissionen der Brennkraftmaschine nur aus bekannten Kennfeld-Daten ermittelt werden können. Derweil befinden sich Sensoren zur direkten Messung der Stickoxid- oder Ammoniakkonzentrationen im Abgas noch im Forschungsstadium, da derzeit solche Sensoren noch zu ungenau oder extrem querempfindlich sind.

Die Kraftstoffwirtschaftlichkeit einer Brennkraftmaschine ergibt sich in der Regel nur indirekt aus den in der Motorsteuerung hinterlegten Motorkennfeldern für den jeweiligen Einspritzzeitpunkt. Es erfolgt dabei keine Rückmeldung bzw. eine Korrektur über den aktuellen Wirkungsgrad oder den Kraftstoffverbrauch der Brennkraftmaschine.

Aus der DE 197 34 494 C1 ist ein Verfahren zum Betrieb einer Brennkraftmaschine bekannt, bei dem eine Rückführrate des Abgases auf Basis einer zweifachen Messung der Sauerstoffkonzentration im Abgas bzw. in der Ladeluft errechnet wird. Neben dem hohen messtechnischen Aufwand wird bei dieser Methode lediglich die Rückführrate des Abgases bestimmt.

Aus der DE 100 43 383 C2 ist ein Verfahren zur Bestimmung des Stickoxidgehalts in Abgasen von Brennkraftmaschinen bekannt, bei dem die der Brennkraftmaschine zugeführte Luftmasse erfasst wird, wobei aus mindestens einem aktuellen Messwert des Motorbetriebs eine Bestimmung des Schwerpunkts der Verbrennung erfolgt. Aus dem Wert für die Lage des Schwerpunkts der Verbrennung sowie den Werten der erfassten Kraftstoffmenge und Luftmasse werden die NOx-Rohemissionen berechnet.

Der Schwerpunkt der Verbrennung beschreibt auf Basis des ersten Hauptsatzes der Thermodynamik jenen Zustand im Brennraum, bei dem 50% der eingebrachten Kraftstoffenergie umgewandelt wurde. Die Lage des Schwerpunkts ist die zugehörige Kurbelwinkelposition, d.h. eine Kurbelwinkelposition des Kolbens, bei der 50% der an der Verbrennung teilnehmenden Kraftstoffmenge in Wärme umgesetzt wurde; siehe z.B. DE 19749817

Der erhebliche Aufwand zur gleichzeitigen Bestimmung von Luft, Kraftstoff und Abgasrückführraten ist nachteilig, da für die Berechnung des Schwerpunkts der Verbrennung ein nach dem Kurbelwinkel aufgelöster Brennraumdruckverlauf erforderlich ist, dessen messtechnische Bestimmung aufwendig ist.

Der Erfindung liegt daher die Aufgabe zugrunde, ein Verfahren zur Regelung einer Brennkraftmaschine bereitzustellen, mit dem ein verbrauchsoptimierter Betrieb der Brennkraftmaschine bei einer gleichzeitigen Senkung der NOx-Emissionen gewährleistet ist.

Diese Aufgabe wird erfindungsgemäß durch ein Verfahren mit den Merkmalen des Anspruchs 1 gelöst.

Das erfindungsgemäße Verfahren zeichnet sich dadurch aus, dass während eines Arbeitsspiels der Brennkraftmaschine eine Kraftstoffmenge betriebspunktabhängig zugemessen wird, wobei die zugemessene Kraftstoffmenge derart in den Brennraum eingespritzt wird, dass eine Lage des Schwerpunkts jeder Verbrennung unabhängig vom Betriebspunkt der Brennkraftmaschine bei einer vorgegebenen Kurbelwinkelposition liegt.

Gemäß der vorliegenden Erfindung steht der Wirkungsgrad der selbstzündenden Brennkraftmaschine in direktem Zusammenhang mit der Lage des Verbrennungsschwerpunkts. Hierbei werden die Motorparameter derart eingestellt, dass bei der jeweiligen Verbrennung bzw. bei jeder Verbrennung die Lage des Schwerpunkts unabhängig vom gefahrenen Betriebspunkt bei einer bestimmten Kurbelwinkelposition liegt. Diese kann für die jeweilige Brennkraftmaschine vor dem Betrieb der Brennkraftmaschine z.B. am Prüfstand ermittelt werden. Bei dieser für die jeweilige Brennkraftmaschine zuvor bestimmte Lage des Verbrennungsschwerpunkts wird ein maximaler Wirkungsgrad erzielt. Diese zuvor bestimmte Lage des Schwerpunkts soll dann möglichst über die gesamte Lebensdauer der Brennkraftmaschine beibehalten werden.

Gemäß einer weiteren Ausgestaltung der Erfindung wird ein aktuelle Lage des Schwerpunkts der Verbrennung in Abhängigkeit von einem erfassten Druckverlauf im Brennraum bestimmt, wobei vorzugsweise der Druckverlauf im Brennraum mittels eines Sensors erfasst wird. Hierdurch wird eine exakte Ermittlung der Lage des Schwerpunktes erzielt. Vorzugsweise wird hierzu der aktuelle Wert der Schwerpunktslage der Verbrennung mit Hilfe eines Rechenmodells ermittelt, wodurch der messtechnische Aufwand weiter reduziert werden kann.

In einer weiteren Ausgestaltung der Erfindung wird der aktuelle Schwerpunkt der Verbrennung in Abhängigkeit von einer Kugelwinkelposition bestimmt, bei der ein maximaler Zylinderdruck im Brennraum erfasst wird. Demnach wird die Schwerpunktslage der Verbrennung mit Hilfe eines empirischen Modells durch einen Zeitpunkt bestimmt, bei dem der maximale Druck im Zylinder, z.B. ein Zünddruck vorliegt. Gemäß der vorliegenden Erfindung hängt die Schwerpunktslage von der Kurbelwinkelposition des im Brennraum maximal auftretenden Drucks ab. Hierdurch wird eine Bestimmung des Verbrennungsschwerpunktes wesentlich vereinfacht vorgenommen, da eine Verarbeitung bzw. detaillierte Auflösung des gesamten Zylinderdruckverlaufs im Brennraum nach dem Kurbelwinkel während der Verbrennung entfällt.

Gemäß einer weiteren Ausgestaltung der Erfindung wird der aktuelle Schwerpunkt der Verbrennung in Abhängigkeit von einer Kraftstoffeinspritzdauer, einem Kraftstoffeinspritzbeginn, einer Ladungsmasse im Brennraum und einer Drehzahl der Brennkraftmaschine ermittelt. Dabei kann die Ladungsmasse zur Vereinfachung aus den in der Motorsteuereinrichtung abgelegten Kennfeldern entnommen werden. Hierdurch wird die Bestimmung des Verbrennungsschwerpunktes über ein empirisches Modell weiter vereinfacht. Eine schnelle Berechnung bzw. Bestimmung der Lage des Schwerpunktes der Verbrennung kann somit ohne den Einsatz von aufwendigen Sensoren im Brennraum erzielt werden.

Gemäß einer weiteren Ausgestaltung der Erfindung wird eine Abgasrückführmenge zur Einstellung einer definierten Sauerstoffkonzentration im Brennraum in Abhängigkeit von der Schwerpunktslage der Verbrennung eingestellt. Hierbei wird aus einer ermittelten NOx-Rohemission der Brennkraftmaschine die notwendige Abgasrückführrate errechnet und die Abgasrückführung solange geregelt, bis sich eine definierte Sauerstoffkonzentration im Brennraum ergibt. Vorzugsweise wird ein Sollwert der Sauerstoffkonzentration als ein konstanter Wert in einem Kennfeld der Brennkraftmaschine in der Motorsteuereinrichtung hinterlegt.

In einer Ausgestaltung des erfindungsgemäßen Verfahrens wird die Lage des Schwerpunkts der Verbrennung mittels einer Variation des Beginns der Selbstzündung und/oder mittels Variation der Kraftstoffeinspritzung eingestellt. Dadurch wird eine gezielte und schnelle Regelung der Brennkraftmaschine beim jeweiligen Lastpunkt erzielt, so dass die Brennkraftmaschine mit einem maximalen Wirkungsgrad bei reduzierter NOx-Rohemissionsbildung betrieben.

Weitere Merkmale und Merkmalskombinationen ergeben sich aus der Beschreibung. Konkrete Ausführungsbeispiele der Erfindung sind anhand der Zeichnungen vereinfacht dargestellt und in der nachfolgenden Zeichnung näher erläutert. Es zeigen:

Fig. 1     einen Querschnitt durch einen Zylinder einer direkteinspritzenden Brennkraftmaschine mit Selbstzündung,

Fig. 2     eine schematische Darstellung eines Wirkungsgradverlaufs einer Brennkraftmaschine nach Fig. 1 in Abhängigkeit vor der Lage des Schwerpunkts der Verbrennung,

Fig. 3     ein schematisches Diagramm der Lage des maximalen Zylinderdruckes der Brennkraftmaschine nach Fig. 1 in Abhängigkeit von der Lage des Schwerpunkts der Verbrennung,

Fig. 4     eine schematische Darstellung eines Vergleiches von zwei Berechnungsmethoden zur Ermittlung der Lage des Schwerpunkts der Verbrennung,

Fig. 5     eine schematische Darstellung einer Korrelation zwischen einer gemessenen Lage des Schwerpunktes und einer gemäß einem Modell errechneten Lage des Schwerpunktes,

Fig. 6     eine schematische Darstellung eines Gastemperaturverlaufes im Brennraum einer Brennkraftmaschine gemäß Fig. 1 während der Verbrennung,

Fig. 7     eine schematische Darstellung eines Zusammenhangs zwischen einem Gradienten der Gastemperatur und einer NOx-Rohemission einer Brennkraftmaschine gemäß Fig. 1,

Fig. 8     eine schematische Darstellung der Maxima einer mittleren Gastemperatur im Brennraum in Abhängigkeit von einer momentanen NOx-Rohemission einer Brennkraftmaschine gemäß Fig. 1,

Fig. 9     eine schematische Darstellung des Verlaufs einer NOx-Reduktionsrate in Abhängigkeit von einer Abgasrückführungsrate, und

Fig. 10     eine schematische Darstellung des Verlaufs einer NOx-Reduktionsrate in Abhängigkeit von einer Sauerstoffkonzentration der Verbrennungsluft einer Brennkraftmaschine gemäß Fig. 1.

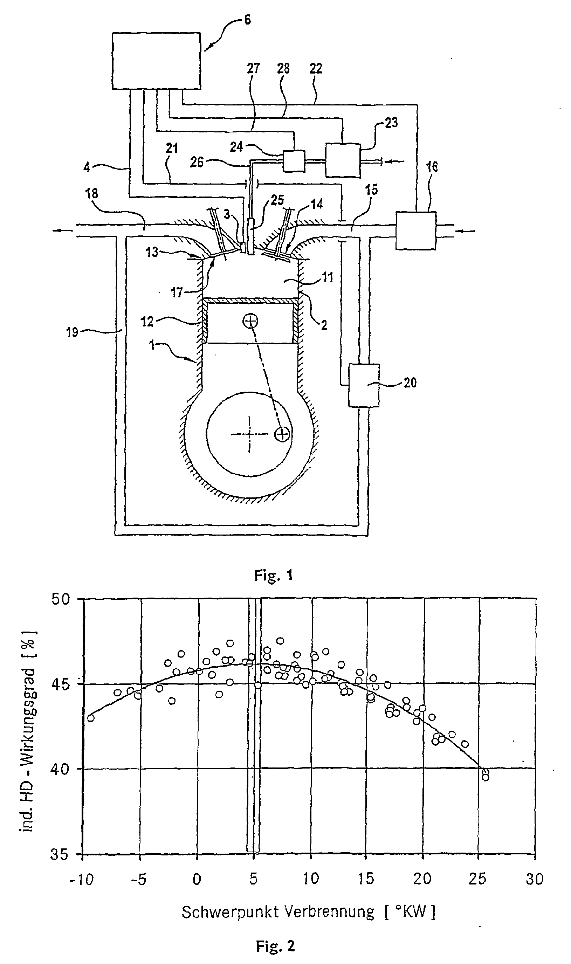

In Fig. 1 ist ein Zylinderblock 1 einer selbstzündenden Brennkraftmaschine mit Direkteinspritzung im Querschnitt dargestellt. In einem Zylinder 2 ist ein Kolben 12 verschiebbar geführt, mit dessen Oberseite und einem Zylinderkopf 13 ein Brennraum 11 begrenzt ist. Ein Einlassventil 14 und ein Auslassventil 17 sind im Zylinderkopf 13 angeordnet, wobei durch das Einlassventil 14 dem Brennraum 11 die notwendige Verbrennungsluft über ein Saugrohr 15 zugeführt wird. Vorzugsweise wird die jeweilige Luftmasse durch einen Luftmassenmesser 16 erfasst, der über eine Leitung 22 mit einer Motorsteuereinrichtung 6 verbunden ist.

Durch das Auslassventil 17 gelangen Verbrennungsgase in eine Abgasleitung 18, die zu einer in der Zeichnung nicht dargestellten Abgasnachbehandlungseinrichtung führt. Diese weist insbesondere zur effektiven Senkung der NOx-Emissionen einen SCR-Katalysator auf. Weiterhin dient eine aus der Abgasleitung 18 abgezweigte Abgasrückführleitung 19 dazu, Verbrennungsgase in das Saugrohr 15 zurückzuführen. In dieser Abgasrückführleitung 19 befindet sich ein Durchflussmesser 20 zur Erfassung des rückgeführten Abgasdurchflusses und zur Einstellung der rückgeführten Abgasmenge. Die erfasste Menge des rückgeführten Abgases wird über eine Leitung 21 an die Motorsteuereinrichtung 6 übertragen.

Des Weiteren ist im Zylinderkopf 13 ein Drucksensor 3 im Brennraum 11 angeordnet, mit dem ein im Brennraum vorliegender Druck über eine Verbindungsleitung 4 an die Motorsteuereinrichtung 6 übertragen wird. Ein Kraftstoffeinspritzventil 25 ist weiterhin im Zylinderkopf 13 angeordnet, welches über eine Einspritzleitung 26 mit einer Einspritzpumpe 23 verbunden ist. Zwischen der Einspritzpumpe 23 und dem Kraftstoffeinspritzventil 25 ist eine Messvorrichtung 24 zur Kraftstoffmengenerfassung vorgesehen. Diese Kraftstoffmesseinrichtung 24 ist über eine elektrische Leitung 27 mit der Motorsteuereinrichtung 6 verbunden. Die Einspritzpumpe 23 ist ebenfalls mit der Motorsteuereinrichtung durch eine Steuerleitung 28 verbunden.

Das erfindungsgemäße Verfahren zielt darauf ab, die Brennkraftmaschine verbrauchsoptimiert mit einem hohen Wirkungsgrad und möglichst bei gleichzeitiger Minimierung der NOx-Emissionen zu betreiben. Erfindungsgemäß wird mittels des Kraftstoffeinspritzventils 25 eine betriebspunktabhängige Kraftstoffmenge in den Brennraum 11 eingebracht. Diese wird derart in den Brennraum 11 eingebracht, dass ein bestimmte Lage des Schwerpunkts bei jeder Verbrennung, d.h. unabhängig vom Betriebspunkt, bei einer konstanten und zuvor bestimmten Kurbelwinkelposition liegt. Bei dieser zuvor bestimmten und in Motorsteuereinsrichtung 6 abgelegten Schwerpunktslage der Verbrennung (Soll-Schwerpunkt) liegt gemäß Fig. 2 ein verbrauchsoptimierter Betrieb der Brennkraftmaschine vor. Um den verbrauchsoptimierten Betrieb zu gewährleisten, wird eine aktuelle Schwerpunktslage der Verbrennung bestimmt und mit dem Soll-Schwerpunkt verglichen. Liegt eine Abweichung vor, dann werden notwendige Betriebsparameter solange verändert, bis die Lage der Verbrennung möglichst dem Soll-Schwerpunkt entspricht.

Da gemäß der vorliegenden Erfindung der Wirkungsgrad der selbstzündenden Brennkraftmaschine in direktem Zusammenhang mit der Lage des Verbrennungsschwerpunkts steht, werden die Motorparameter, insbesondere die Kraftstoffeinspritzparameter wie Einspritzzeitpunkt, Einspritzdauer sowie Einspritztaktung derart eingestellt, dass bei der jeweiligen Verbrennung bzw. bei jeder Verbrennung die optimale Lage des Schwerpunkts vorliegt. Die optimale Lage der Verbrennung bzw. der Soll-Schwerpunkt der Verbrennung kann für die jeweilige Brennkraftmaschine z.B. am Prüfstand ermittelt werden. Dieser Soll-Wert wird dann für die jeweilige Brennkraftmaschine in der Motorsteuereinrichtung 6 abgelegt.

Die Einstellung der Schwerpunktslage bzw. die Anpassung des aktuellen Werts an den Soll-Wert kann mittels einer Variation des Beginns der Selbstzündung und/oder mittels der Variation der Kraftstoffeinspritzung erzielt werden. Dadurch wird eine gezielte und schnelle Regelung der Brennkraftmaschine beim jeweiligen Lastpunkt durchgeführt, so dass die Brennkraftmaschine mit einem hohen Wirkungsgrad betrieben wird. Wird beispielsweise die lastabhängige Kraftstoffmenge in Form einer Vor-, Haupt- und gegebenenfalls einer Nacheinspritzung in den Brennraum 11 eingebracht, dann können sowohl die Einspritzzeitpunkte als auch die Kraftstoffmengenverhältnisse der jeweiligen Teilmengen variiert werden, um die Anpassung der aktuellen Schwerpunktslage der Verbrennung an den Soll-Wert zu erzielen. Weiterhin können die Kraftstoffeinspritzdrücke der Vor-, Haupt- und gegebenenfalls der Nacheinspritzung variiert werden.

Für die Bestimmung der Lage des Schwerpunkts sind unterschiedliche Methoden bekannt. Die klassische Berechnungsmethode basiert auf der Analyse des Zylinderdruckverlaufs der jeweiligen Verbrennung. Als Grundlage dient hierfür der erste Hauptsatz der Thermodynamik. Bei dieser Methode sind der Druckverlauf im Brennraum, die Volumenänderung, ein Modell für die Wandwärmeverluste und die Ladungsmasse zur Bestimmung der aktuellen Schwerpunktslage erforderlich.

Alternativ kann die Lage des Schwerpunkts aus dem Heizverlauf der Verbrennung ermittelt werden. Demnach ist eine temperaturabhängige Berechnung der inneren Energie bzw. des Polytropenexponenten erforderlich. Dabei dient ebenfalls der erste Hauptsatz der Thermodynamik als Grundlage, wobei der Druckverlauf im Brennraum, die Volumenänderung und Ladungsmasse der jeweiligen Verbrennung bekannt sein müssen. Diese Methode kann als eine Online-Berechnung am Prüfstand oder am Motor in der Motorsteuereinrichtung durchgeführt werden. Diese Methode weist nur geringfügige Abweichungen von der ersten Berechnungsmethode auf.

Eine weitere Methode zur Bestimmung der Lage des Schwerpunkts kann erfindungsgemäß mit Hilfe eines empirischen Modells aus Einspritzdaten, wie Einspritzbeginn, Einspritzdauer, sowie Drehzahl der Brennkraftmaschine bei bekannter Ladungsmasse erfolgen, wobei die Ladungsmasse vorzugsweise in einem in der Motorsteuereinrichtung 6 abgelegten Kennfeld gespeichert ist. Die Schwerpunktslage in Kurbelwinkelgraden wird erfindungsgemäß primär durch die Daten des Einspritzbeginns, der eingespritzten Kraftstoffmenge bzw. Einspritzdauer sowie der Motordrehzahl bestimmt. Späte Einspritzbeginne, höhere Einspritzmengen und Drehzahlen bewirken eine Verschiebung der Schwerpunkt-Position weg von einem oberen Totpunkt OT in die Expansionsphase. Hinzu kommt ein schwach ausgeprägter Einfluss der Luftmasse im Zylinder 2.

Eine Berechnungsgleichung für die Lage des Schwerpunktes in Grad Kurbelwinkel lautet wie folgt:

$$SP = a_0 + a_1 \cdot SB + a_2 \cdot SD + a_3 \cdot t + a_4 \cdot m_{zyl} \ .$$

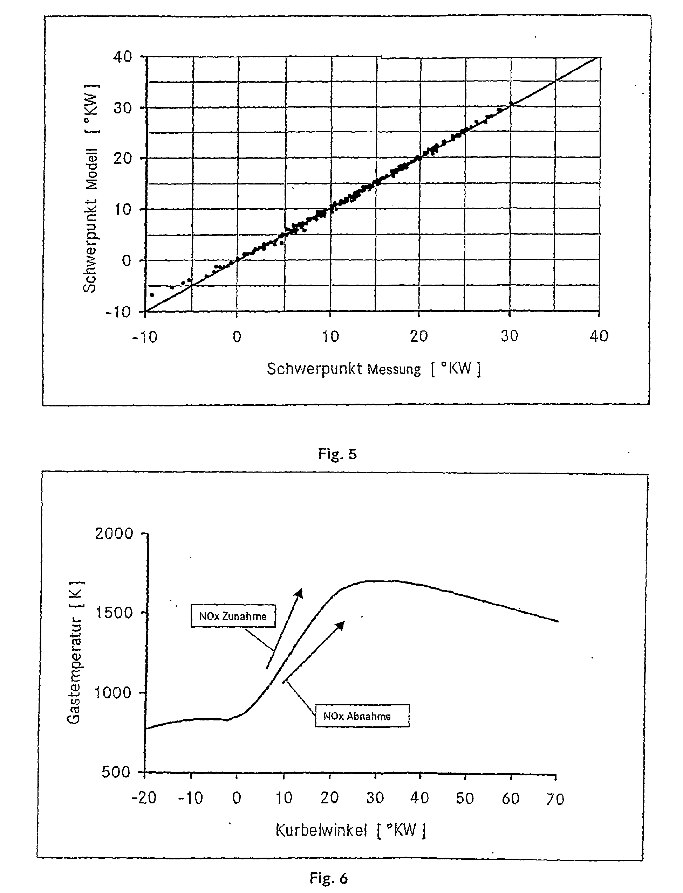

Dabei steht SP für die Lage des Schwerpunkts der Verbrennung, SB für den Einspritzbeginn, SD für die Einspritzdauer, t für die Zeitdauer je Arbeitsspiel, $m_{zyl}$ für die Ladungsmasse. Die Koeffizienten $a_0$ bis $a_4$ sind Modellkoeffizienten für die jeweilige Brennkraftmaschine. Die Qualität des Modells nach der o.g. Gleichung ist gemäß der Darstellung in Fig. 5 zu sehen, wo eine gute Korrelation zwischen der durch das Modell ermittelten Lage des Schwerpunktes und einer über den ersten Hauptsatz der Thermodynamik errechneten Lage des Schwerpunktes der Verbrennung zu sehen ist.

Mit Hilfe des im Brennraum 11 vorgesehenen Drucksensors 3 wird vorzugsweise ein Druckverlauf im Brennraum 11 während eines Arbeitsspiels erfasst und an die Motorsteuereinrichtung 6 weitergeleitet. Aus dem erfassten Druckverlauf kann die aktuelle Schwerpunktslage der Verbrennung bestimmt werden. Die Lage des Schwerpunkts ändert sich bezüglich des Kurbelwinkels bei Änderung des Verbrennungsverlaufes. Mit Hilfe des erfassten Druckverlaufes und der zugemessenen Kraftstoffmenge pro Arbeitspiel wird ein Wirkungsgrad der Brennkraftmaschine mit Hilfe der Motorsteuereinrichtung 6 bestimmt, der in einem direkten Zusammenhang gemäß Fig. 2 mit der Lage des Schwerpunkts der Verbrennung steht. Hierbei kann der Schwerpunkt der Verbrennung aus der Indizierung des Zylinderdruckes in Kombination mit einer Messung der Kolbenposition im Brennraum über den ersten Hauptsatz der Thermodynamik berechnet werden.

Gemäß Fig. 2 soll bei der Brennkraftmaschine unabhängig vom Lastpunkt ein maximaler Wirkungsgrad bei einer bestimmten Lage des Schwerpunktes eingestellt werden. Hierbei ist es notwendig die Verbrennung derart zu regeln, dass die Lage des Schwerpunkts der Verbrennung bei der Kolbenposition liegt, bei der der maximale Wirkungsgrad erreicht wird, z.B. gemäß Fig. 2 bei 5°KW nach OT. Dies kann durchaus ein kleiner Bereich, d.h. ein Kurbelwinkelfenster sein, der durch die Motorsteuereinrichtung 6 angestrebt wird.

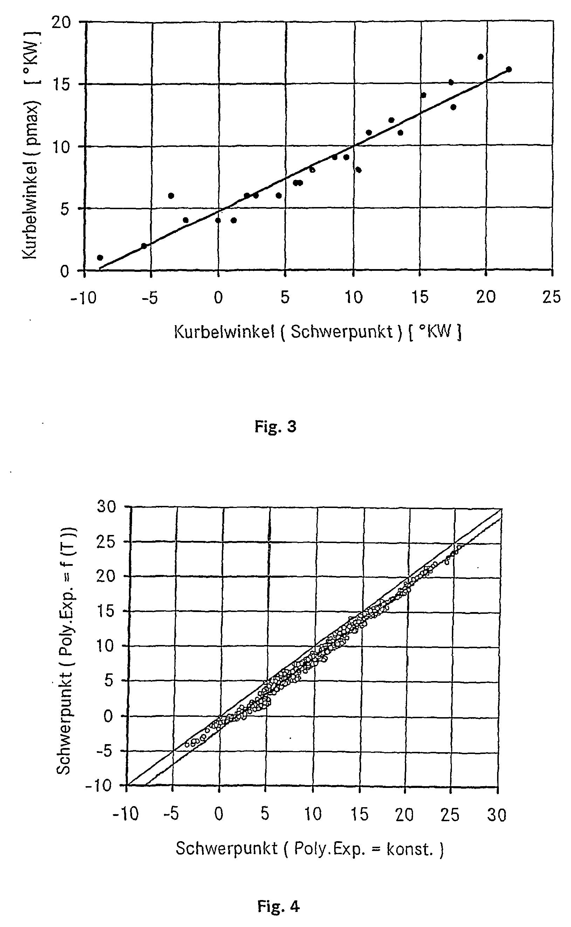

Alternativ kann die Kurbelwinkelposition eines maximalen Brennraumdruckes dazu dienen, die Schwerpunktslage der Verbrennung präzise und schnell zu bestimmen. Hierbei liegt gemäß Fig. 3 ein direkter empirischer Zusammenhang zwischen dem maximal auftretenden Brennraumdruck und der Lage des Schwerpunktes während eines Arbeitsspiels vor. Dabei kann die Schwerpunktslage vorzugsweise gemäß der Erfindung über ein empirisches Modell aus einem Zünddruck ermittelt werden. Hierfür werden der maximale Zylinderdruck und die dazugehörige Kurbelwinkelposition erfasst.

Weiterhin kann erfindungsgemäß mit Hilfe des ersten Hauptsatzes der Thermodynamik aus dem Heizverlauf mit konstantem Polytropenexponent unter Einbeziehung des Druckverlaufs sowie der Volumenänderung die Lage des Schwerpunkts ermittelt werden, wobei hier die Erfassung der Luftmasse im Zylinder nicht benötigt wird. Gemäß Fig. 4 zeigt diese Methode ebenfalls eine gute Korrelation mit bisher bekannten Messmethoden.

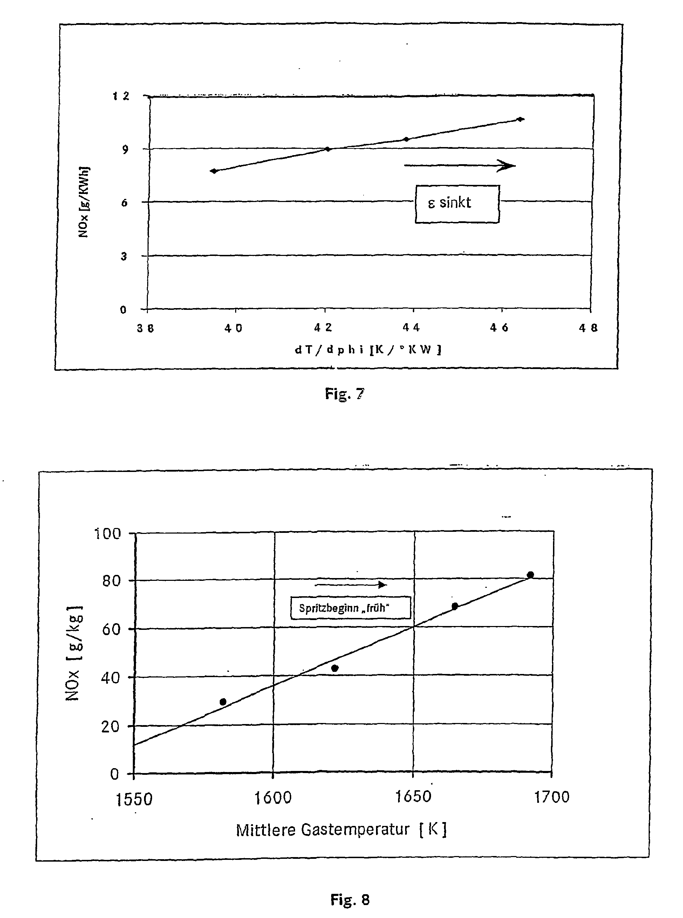

Mit Hilfe der vorliegenden Erfindung kann ebenfalls die NOx-Rohemission der selbstzündenden Brennkraftmaschine bestimmt werden, so dass die Betriebsweise bzw. Einstellung der in Fig. 1 nicht dargestellten Abgasnachbehandlungseinrichtung optimiert wird. Erfindungsgemäß wird der Verlauf einer mittleren Gastemperatur im Brennraum 11 der Brennkraftmaschine ermittelt, so dass ein Gradient der Gastemperatur zu einer Kurbelwinkeländerung dT/dphi in einem definierten Kurbelwinkelfenster gemäß Fig. 6 berechnet wird und daraus gemäß Fig. 7 eine NOx-Rohemission der Brennkraftmaschine ermittelt wird.

Der Gradient der Gastemperatur in einem definierten Kurbelwinkelbereich steht erfindungsgemäß in einem direkten Zusammenhang mit der NOx-Rohemission der Brennkraftmaschine. Somit wird eine Bestimmung der NOx-Rohemission der Brennkraftmaschine beispielsweise zur Optimierung einer nachgeschalteten Abgasnachbehandlungseinrichtung präzise vorgenommen und auf einem schnellen Wege durchgeführt. In Fig. 8 ist der Zusammenhang zwischen der maximalen mittleren Gastemperatur im Brennraum und einer momentanen NOx-Rohemission der Brennkraftmaschine dargestellt. Bei entsprechender Regelung der Verbrennung kann demgemäss die Bildung der NOx-Emissionen während der Verbrennung minimiert werden. Dabei wird die dem Brennraum zugemessene Kraftstoffmasse solange geregelt, bis sich eine konstante Kurbelwinkelposition des Verbrennungsschwerpunktes ergibt.

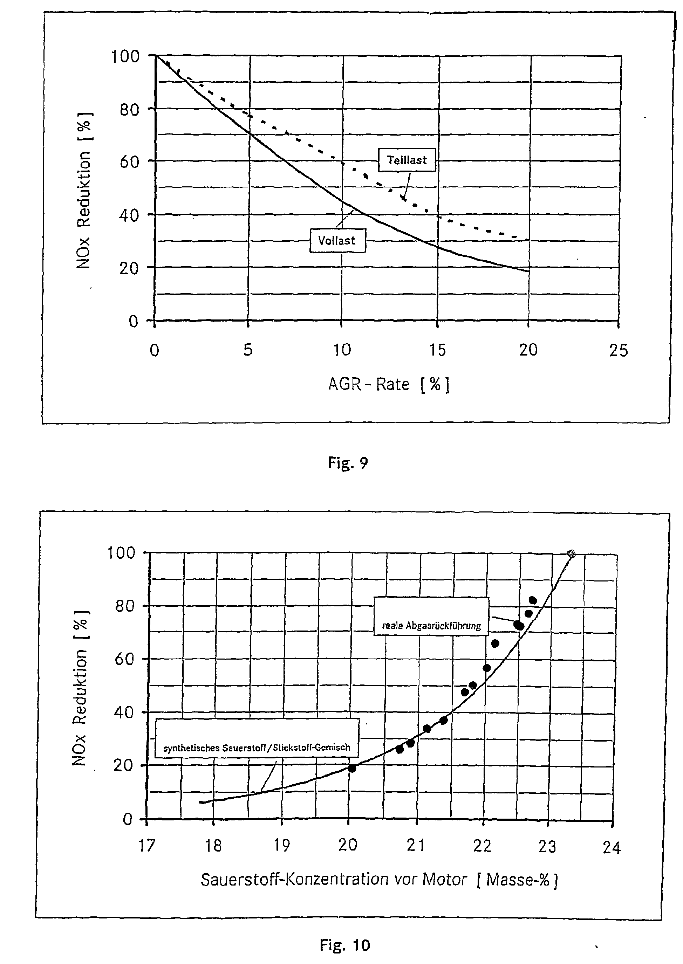

In der Regel kann eine relative NOx-Reduktion durch eine Abgasrückführung bewerkstelligt werden. Demnach steht die relative NOx-Reduktion in direktem Zusammenhang mit der Sauerstoff-Konzentration der Zylinderladung. Je nach Lastpunkt der Brennkraftmaschine ergeben sich gemäß Fig. 9 beim heutigen Stand der Technik aus den gleichen Abgasrückführraten unterschiedliche prozentuale Stickoxid-Absenkungen. Im Gegensatz hierzu wird erfindungsgemäß die Sauerstoffkonzentration der Zylinderladung als eine Mess- bzw. Regelgröße verwendet. Demnach wird dann eine definierte Sauerstoff-Konzentration der Verbrennungsluft im Brennraum 11 eingestellt. Diese wird gemäß Fig. 10 gemessen bzw. als eine Stell- und Messgröße benutzt.

Die ermittelte NOx-Rohemission der Brennkraftmaschine aus einem Maximalwert der mittleren Gastemperatur im Brennraum gemäß Fig. 8 wird dann für eine angestrebte notwendige NOx-Reduktion herangezogen und daraus gemäß Fig. 10 eine Abgasrückführrate bestimmt. Die Abgasrückführmenge wird demnach derart geregelt, dass sich eine definierte Sauerstoffkonzentration im Einlasskanal 15 gemäß Fig. 10 einstellt. Dabei wird ein Sollwert einer Sauerstoffkonzentration vorzugsweise in der Motorsteuereinrichtung 6 als ein Konstantwert in einem Kennfeld hinterlegt. Erfindungsgemäß dient hierzu der in Fig. 10 dargestellte Zusammenhang zwischen einer NOx-Reduktionsrate und einer Abgasrückführrate. Hierdurch wird die Abgasrückführmenge derart eingestellt, dass eine definierte Sauerstoffkonzentration in der angesaugten Luft im Ansaugkanal 15 vorliegt. Somit wird eine im Brennraum gebildete NOx-Emission reduziert und die dafür vorgesehene Abgasnachbehandlung optimiert, so dass in einem nachgeschalteten SCR-Katalysator z.B. die Zudosierung einer NH3 Menge mit Hilfe der vorliegenden Erfindung optimal vorgenommen werden kann.

## Patentansprüche

1. Verfahren zum Betrieb einer Dieselbrennkraftmaschine mit einem Zylinder, in dem ein Brennraum zwischen einem Kolben und einem Zylinderkopf begrenzt ist, einer Motorsteuereinrichtung und einer Kraftstoffeinspritzeinrichtung, bei dem während eines Arbeitsspiels eine Kraftstoffmenge betriebspunktabhängig zugemessen wird,
   **dadurch gekennzeichnet,**
   **dass**
   die zugemessene Kraftstoffmenge mittels Einstellung der Kraftstoffeinspritzparameter wie Einspritzzeitpunkt, Einspritzdauer sowie Einspritztaktung derart in den Brennraum eingespritzt wird, dass eine Lage des Schwerpunkts der Verbrennung unabhängig vom Betriebspunkt der Brennkraftmaschine bei einer bestimmten Kurbelwinkelposition liegt.

2. Verfahren nach Anspruch 1,
   **dadurch gekennzeichnet,**
   **dass** eine aktuelle Lage des Schwerpunkts der Verbrennung in Abhängigkeit von einem erfassten Druckverlauf im Brennraum bestimmt wird, wobei vorzugsweise der Druckverlauf im Brennraum mittels eines Sensors erfasst wird.

3. Verfahren nach Anspruch 1 oder 2,
   **dadurch gekennzeichnet,**
   **dass** die aktuelle Lage des Schwerpunkts der Verbrennung in Abhängigkeit von einer Kurbelwinkelposition bestimmt wird, bei der ein maximaler Zylinderdruck im Brennraum erfasst wird.

4. Verfahren nach Anspruch 1,
   **dadurch gekennzeichnet,**
   **dass** die aktuelle Lage des Schwerpunkts der Verbrennung in Abhängigkeit von einer Kraftstoffeinspritzdauer, einem Kraftstoffeinspritzbeginn, einer Ladungsmasse im Brennraum und einer Drehzahl der Brennkraftmaschine ermittelt wird.

5. Verfahren nach einem der Ansprüche 1 bis 4,
   **dadurch gekennzeichnet,**
   **dass** eine Abgasrückführmenge zur Einstellung einer definierten Sauerstoffkonzentration im Brennraum in Abhängigkeit vom Schwerpunkt der Verbrennung eingestellt wird.

6. Verfahren nach einem der Ansprüche 1 bis 5,
   **dadurch gekennzeichnet,**
   **dass** die Lage des Schwerpunkts der Verbrennung mittels Variation des Beginns der Selbstzündung oder mittels Variation der Kraftstoffeinspritzung eingestellt wird.

## Claims

1. Method for operating a self-ignition internal combustion engine having a cylinder in which a combustion chamber is delimited by a piston and a cylinder head, an engine control system and a fuel injection system, and in which a volume of fuel is apportioned dependent on operating point during an operating cycle,
   **characterised in that**

the apportioned fuel volume is injected into the combustion chamber by setting fuel injection parameters such as injection point, injection period and injection timing in such a manner that a position of the main focus of combustion lies at a specific crank angle position irrespective of the operating point of the internal combustion engine.

2. Method in accordance with claim 1,
**characterised in that**
a position of the main focus of combustion at a given time is determined dependent on a measured pressure curve in the combustion chamber, the pressure curve in the combustion chamber preferably being measured by means of a sensor.

3. Method in accordance with claim 1 or 2,
**characterised in that**
the position of the main focus of combustion at a given time is determined dependent on a crank angle position at which a maximum cylinder pressure is measured in the combustion chamber.

4. Method in accordance with claim 1,
**characterised in that**
the position of the main focus of combustion is calculated dependent on a fuel injection period, a fuel injection start point, a charge mass in the combustion chamber and an internal combustion engine speed.

5. Method in accordance with one of claims 1 to 4,
**characterised in that**
an exhaust gas recirculation volume is set dependent on the main focus of combustion in order to set a defined oxygen concentration in the combustion chamber.

6. Method in accordance with one of claims 1 to 5,
**characterised in that**
the position of the main focus of combustion is adjusted by varying the start of self-ignition or by varying fuel injection.

**Revendications**

1. Procédé pour le fonctionnement d'un moteur à combustion interne diesel comportant un cylindre, dans lequel une chambre de combustion est délimitée entre un piston et une culasse, un dispositif de commande du moteur et un dispositif d'injection de carburant, dans lequel procédé, pendant un cycle de fonctionnement, une quantité de carburant est admise de manière dosée en fonction du point de fonctionnement dynamique, **caractérisé en ce que** la quantité de carburant admise de manière dosée est injectée dans la chambre de combustion au moyen du réglage des paramètres d'injection, tels que le moment d'injection, la durée d'injection, ainsi que la synchronisation de l'injection, de telle sorte qu'une position du barycentre de la combustion est située indépendamment du point de fonctionnement dynamique du moteur à combustion interne lors d'une position angulaire déterminée du vilebrequin.

2. Procédé selon la revendication 1, **caractérisé en ce qu'une** position actuelle du barycentre de la combustion est déterminée en fonction d'une évolution de la pression détectée dans la chambre de combustion, sachant que l'évolution de la pression dans la chambre de combustion est détectée, de préférence, au moyen d'un capteur.

3. Procédé selon la revendication 1 ou 2, **caractérisé en ce que** la position actuelle du barycentre de la combustion est déterminée en fonction d'une position angulaire déterminée du vilebrequin, pendant laquelle une pression maximale du cylindre est enregistrée dans la chambre de combustion.

4. Procédé selon la revendication 1, **caractérisé en ce que** la position actuelle du barycentre de la combustion est déterminée en fonction d'une durée d'injection du carburant, d'un début d'injection du carburant, d'un volume de charge dans la chambre de combustion et d'une vitesse de rotation du moteur à combustion interne.

5. Procédé selon l'une quelconque des revendications 1 à 4, **caractérisé en ce qu'une** quantité de retour de gaz d'échappement, destinée à régler une concentration en oxygène définie dans la chambre de combustion, est réglée en fonction du barycentre de la combustion.

6. Procédé selon l'une quelconque des revendications 1 à 5, **caractérisé en ce que** la position du barycentre de la combustion est réglée au moyen de la variation du début de l'auto-allumage ou au moyen de la variation de l'injection de carburant.

**Fig. 1**

**Fig. 2**

Fig. 3

Fig. 4

**Fig. 5**

**Fig. 6**

Fig. 7

Fig. 8

Fig. 9

Fig. 10

**IN DER BESCHREIBUNG AUFGEFÜHRTE DOKUMENTE**

**In der Beschreibung aufgeführte Patentdokumente**

- DE 19734494 C1
- DE 10043383 C2
- DE 19749817